# EUROPÄISCHE PATENTANMELDUNG

(11) **EP 0 867 328 A2**
(43) Veröffentlichungstag der Anmeldung: **30.09.1998**
(21) Anmeldenummer: 98250080.3
(22) Anmeldetag: 04.03.1998
(51) Int. Cl.: B60N 2/00, B60N 2/06

(54) **Sitzeinheit für Kraftfahrzeuge**

(30) Priorität: 13.03.1997 DE 19712006
(71) Anmelder: Brose Fahrzeugteile GmbH & Co. KG, 96450 Coburg (DE)
(72) Erfinder: Schumann, Peter, 96253 Untersiemau (DE); Neuhauser, Werner, 96479 Weidach (DE)
(74) Vertreter: Müller, Wolfram Hubertus, Dipl.-Phys.

(57) **Zusammenfassung**

Die Erfindung betrifft eine Sitzeinheit für Kraftfahrzeuge mit mehreren Sitzelementen, insbesondere Elementen einer Sitzlängsverstellung, Befestigungs- und Lagerelementen, Sitzseitenteilen, einer Sitzschale und/oder Getriebegehäusen. Erfindungsgemäß sind mindestens zwei der Sitzelemente (2, 2', 3, 5) in einem einstückigen Gußteil ausgebildet. Insbesondere ist mindestens eine der Schieneneinrichtungen (2, 2') einer Sitzlängsverstellung als Gußteil ausgebildet ist und sind an dieser Schieneneinrichtung (2, 2') weitere Sitzelemente (3, 5) einstückig angeformt sind. Die Erfindung stellt eine Sitzeinheit zur Verfügung, bei der die einzelnen Teile der Sitz einheit optimal hinsichtlich ihrer Gestaltung an die zu erwartenden Belastungsbedingungen anpaßbar sind und die Anzahl der Teile der Sitzeinheit verringert ist.

## Beschreibung

Die Erfindung betrifft eine Sitzeinheit für Kraftfahrzeuge nach dem Oberbegriff des Anspruchs 1.

Der Begriff "Sitzeinheit" bezieht sich hierbei auf jeden Teil eines Fahrzeugsitzes, der mindestens zwei Sitzelemente umfaßt. Als Sitzelemente werden alle Elemente verstanden, die zum strukturellen und/oder funktionellen Aufbau eines Fahrzeugsitzes gehören einschließlich Befestigungs- und Verstellmitteln. Insbesondere sind auch die beiden Schieneneinrichtungen einer Sitzlängsverstellung (in der Regel ein aus zwei Unterschienen bzw. Oberschienen bestehendes Schienenpaar) Sitzelemente im Sinne der Erfindung.

Aus der DE 37 03 515 A1 ist eine Sitzeinheit bekannt, bei der eine bodenseitige Lagerung obere und untere Schienen aufweist, wodurch eine Vorwärts- und Rückwärtsbewegung des Sitzes ermöglicht wird. Das ein Sitzpolster tragende Sitzgestell ist mit den voneinander getrennten oberen Schienen der Lagerung über Lenker verbunden, die im vorderen sowie im rückwärtigen Bereich des Sitzes vorgesehen sind. Neben der Sitzlängsverstellung ermöglichen gängige Getriebe sowohl eine Sitzhöhenverstellung als auch eine -neigungsverstellung. Diese Verstelleinheiten sind am Sitzgestell angebracht. Nachteilig bei dieser Konstruktion ist die Vielzahl von einzelnen Bauelementen, die am Schienenoberteil befestigt werden müssen. Dies führt zu einer aufwendigen Montage und relativ hohen Herstellungskosten.

In der DE 44 19 139 A1 ist eine Vorrichtung offenbart, mit der die Anzahl der Bauteile auf dem Schienenoberteil beschränkt wird. Hierzu wird eine Rahmenkonstruktion für den Sitz eines Fahrzeuges mit einem Sitzflächenteil, einem Lehnenteil und mit Abstützteilen zum Abstützen des Sitzflächenteils auf einer am Fahrzeugboden in Fahrzeuglängsrichtung angeordneten Schienenkonstruktion zur Verfügung gestellt. Die Abstützteile sind mit den in Fahrzeuglängsrichtung verlaufenden Bauelementen des Sitzflächenteils in einem Stück als Aluminiumstrangpreßprofilteil ausgebildet. Quer zur Profilebene sind Ausbauchungen ausgebildet, die das Profilteil gegenüber Biegungen um eine zur Profillängsrichtung parallele Achse versteifen.

Zwar verringert sich bei diesem Vorschlag die Anzahl der Bauelemente zur Befestigung des Sitzes an der Schienenkonstruktion, jedoch müssen auch hier alle zusätzlichen Elemente (so z.B. Führungen und Getriebe für eine Längs- bzw. Höhenverstellung des Sitzes) zusätzlich an der Rahmenkonstruktion befestigt werden. Zudem müssen die Befestigungsmittel der einzelnen Bauteile (z.B Bohrungen oder Einfräsungen) meist durch einen zweiten, nach dem Strangpressen erfolgenden Arbeitsschritt hergestellt werden.

Aus der DE 94 12 155.9 U1 ist eine Schienenführung mit zwei zueinander verschiebbaren Schienen bekannt, von denen eine Schiene eine sich entlang des Verschiebeweges erstreckende, kunststoffbeschichtete Verzahnung trägt, in die eine mit der anderen Schiene verbundene Antriebsschnecke kämmend eingreift, wobei die Antriebsschnecke über weitere Getriebeelemente mit einem Antrieb in Verbindung steht. Die äußere Kontur der kunststoffbeschichteten Verzahnung, die aus Verzahnungselementen oder einer Zahnstange besteht, entspricht dabei der Kontur des Eingriffsbereich der Antriebsschneckenverzahnung, die als Schrägverzahnung ausgebildet ist. Durch die Kunstoffbeschichtung wird eine durch Stanzen hergestellte Geradverzahnung zu einer Schrägverzahnung umgebildet, wobei mit der so erhaltenen Schrägverzahnung eine dauerhafte Flächenberührung mit der Schnecke hergestellt wird.

Nachteilig an dieser Lösung ist die aufwendige Herstellung und die Anzahl der Arbeitsschritte bis zum Erhalt der Schrägverzahnung.

Aus der DE 196 17 877 A1 ist eine Schienenführung bestehend aus zwei in Längsrichtung zueinander verstellbaren Schienen bekannt, bei der ein Getriebegehäuse mit einer der Schienen durch ein Befestigungsmittel verbunden ist. Im einzelnen ist vorgesehen, daß ein mit der ersten Schiene verbundenes Getriebegehäuse zum Zweck der Spieleinstellung quer zur Längsrichtung der Schienen verschiebbar und in einer Position arretierbar ist, in der die Verzahnung einer in dem Getriebegehäuse gelagerten Verstellschnecke mit einem vorgebbaren, definierten Spiel in eine Verzahnung der zweiten Schiene eingreift. Bei dieser Lösung müssen die beiden getrennten Elemente (Getriebegehäuse und Schiene) nachteilig durch ein gesondertes Befestigungsmittel miteinander verbunden werden.

Der Erfindung liegt die Aufgabe zugrunde, eine Sitzeinheit zur Verfügung zu stellen, bei der die einzelnen Teile der Sitzeinheit optimal hinsichtlich ihrer Gestaltung an die zu erwartenden Belastungsbedingungen anpaßbar sind und die Anzahl der Teile der Sitzeinheit verringert ist.

Diese Aufgabe wird erfindungsgemäß durch eine Sitzeinheit mit den Merkmalen des Anspruchs 1 gelöst.

Danach sind mindestens zwei der Sitzelemente einer Sitzeinheit (z.B. Elemente einer Sitzlängsverstellung, Sitzseitenteile und eine Sitzschale) in einem einstückigen Gußteil ausgebildet. Unter einem Gußteil wird dabei jedes Teil verstanden, welches durch Gießen mittels einer Gußform hergestellt wird. Neben den klassischen Gußverfahren fällt hierunter z.B. auch das Spritz- oder Druckgießen. Die Herstellung mindestens zwei der Sitzelemente als Gußteil kann mittels geeigneter Gußformen in einfacher Weise erfolgen.

Der Herstellung von Sitzelementen als Gußteil, insbesondere einer Schieneneinrichtung für Kraftfahrzeugsitze, stand bisher in der Fachwelt das Vorurteil entgegen, daß wegen der hierfür erforderlichen, sehr teuren Gußformen eine wirtschaftliche Fertigung nicht möglich sei. Und selbst wenn die Gußteile wirtschaftlich hergestellt werden könnten, so müßten sie - nach Meinung der Fachwelt - aufgrund ihrer Sprödigkeit mit großen Wandstärken ausgeführt werden, die zu einem hohen Gewicht führen. Andernfalls könnten sie größeren Belastungen, etwa bei einem Crash, nicht standhalten. Aus diesem Grund werden Schieneneinrichtungen für Kraftfahrzeugsitze bisher durch Strangpressen oder dergleichen hergestellt.

Demgegenüber beruht die Erfindung auf der Erkenntnis, daß an ein Sitzelement, das als Gußteil ausgebildet ist, insbesondere an eine Schieneneinrichtung durch Verwendung einer geeigneten Gußform in einfacher Weise eine Vielzahl weiterer Sitzelemente angeformt werden können. Dadurch läßt sich die Anzahl der Sitzelemente eines Kraftfahrzeugsitzes und damit auch die Anzahl der Verbindungsmittel reduzieren. Ferner werden Toleranzen vermieden, die üblicherweise an den Verbindungspunkten auftreten. Die einzelnen angeformten Sitzelemente können unterschiedlich dicke Wandstärken und Ausnehmungen besitzen, so daß an allen wichtigen Punkten der Sitzeinheit die Stabilität gewährleistet ist und das Gewicht gleichzeitig minimiert werden kann. Durch Ausbildung als Gußteil sind die einzelnen Teile der Sitzeinheit somit optimal hinsichtlich ihrer Gestaltung an die zu erwartenden Belastungsbedingungen anpaßbar.

Bei einer bevorzugten Ausführungsform der Erfindung weist die Sitzeinheit eine fahrzeugfest angeordnete führende Schieneneinrichtung und eine entlang der führenden Schieneneinrichtung verschiebbar geführte Schieneneinrichtung auf. Mindestens eine dieser Schieneneinrichtungen ist als Gußteil ausgebildet, wobei weitere Sitzelemente einstückig durch Gießen mit der mindestens einen als Gußteil ausgebildeten Schieneneinrichtung verbunden sind.

Bei einer weiteren Ausgestaltung der Erfindung umfassen die an die Schieneneinrichtung einstückig angeformten weiteren Sitzelemente Bestandteile einer Sitzverstelleinrichtung.

Beispielsweise ist ein Getriebegehäuse, das zur Aufnahme eines Verstellgetriebes für eine Sitzlängsverstellung vorgesehen ist, an der als Gußteil geformten Schieneneinrichtung einstückig angeformt. Der Vorteil einer solchen Konstruktion ist die deutliche Verringerung der Anzahl der Bauelemente, die in einem einfach zu handhabbaren Gußverfahren mit einer geeigneten Gußform einstückig herstellbar sind. Dieses Vorgehen vermeidet jegliche Art von Befestigungsmitteln, mit denen einzelne Bauteile miteinander verbunden werden müßten. Dies führt zu einer Rationalisierung des Herstellungsverfahrens und zu einer einfachen Montage der Sitzeinheit.

Zur Verbesserung der Gleiteigenschaften eines Verstellgetriebes, das sich in einem Gehäuse für die Sitzlängsverstellung befindet, ist erfindungsgemäß eine vorzugsweise an der ersten Schieneneinrichtung in Schienenlängsrichtung verlaufende Verzahnung und vorzugsweise an der zweiten Schieneneinrichtung (z.B. der Oberschiene) das Gehäuse für das Verstellgetriebe angeformt. Die Verzahnung der ersten Schieneneinrichtung ist bevorzugt als Schrägverzahnung ausgebildet, so daß sie an die Kontur der Verzahnung der Verstellschnecke des Verstellgetriebes angepaßt ist. Insbesondere die Schrägverzahnung kann beim Gießen direkt hergestellt werden, was mit sonst üblichen Strangpressverfahren nicht erreichbar ist.

Bei einer weiteren Ausgestaltung dieser Erfindung weist die mit der Verzahnung ausgebildete Schieneneinrichtung einen ersten Steg mit einer Schrägverzahnung und einen zweiten Steg mit einer Geradverzahnung auf. Die Verstellschnecke kämmt im Normalbetrieb lediglich mit der Schrägverzahnung. Im Crashfall tritt die Verstellschnecke jedoch zusätzlich mit der Geradverzahnung in Eingriff, so daß eine zusätzliche Sicherung erfolgt.

Weiterhin ist es vorteilhaft, daß in der als Gußteil ausgebildeten Schieneneinrichtung eine Lagerstelle für ein Betätigungselement einer Sitzverstelleinrichtung, z.B. für einen schwenkbar gelagerten Hebel, und ein Anschlag zur Begrenzung des Verstellweges angeformt sind.

In einer bevorzugten Ausführungsform der Erfindung ist zumindest die geführte Schieneneinrichtung als Gußteil ausgebildet und es sind tragende Sitzelemente an ihr einstükkig angeformt. Dabei kann ein Sitzseitenteil und/oder eine Sitzschale der Sitzeinheit ein solches Sitzelement sein. Auch hier liegt der Vorteil wiederum in der Verringerung der Anzahl der Bauteile und der damit leichteren Handhabung.

Bei einer weiteren bevorzugten Ausführungsform der Erfindung ist zumindest die führende Schieneneinrichtung (z.B. eine Unterschiene) als Gußteil ausgebildet und es sind an ihr Verbindungsmittel einstückig angeformt, die zur fahrzeugfesten Anordnung der Schieneneinrichtung vorgesehen sind. Somit kann die gesamte Sitzeinheit am Boden eines Fahrzeugs einfach befestigt werden.

Ferner kann durch die Ausbildung einer Schieneneinrichtung und ggf. weiterer daran angeformter Sitzelemente als Gußteil die Materialdicke dieser Sitzeinheit variiert werden, so daß jeder Bereich der Sitzeinheit genau die Materialdicke aufweist, die jeweils die erforderliche Stabilität gewährleistet.

In dieser Ausgestaltung der Erfindung kann die Dicke des Materials, aus dem die als Gußteil ausgebildete Schieneneinrichtung besteht, entlang der Schienenlängsrichtung variieren. Dadurch wird zum einen zusätzliches Gewicht eingespart. Darüberhinaus wird die Dicke des Materials an allen Punkten der Schieneneinrichtung so gewählt, daß bei einem Unfall auftretende Crash-Kräfte möglichst keine oder nur geringe Beschädigungen der Schieneneinrichtung herbeiführen. Insbesondere an den Schienenenden - und hier besonders an dem hinteren Ende der Oberschiene - ist die Materialdikke größer als in jedem anderen Bereich der Schieneneinrichtung, so daß bei einem Crash eine leichte Verformung der Schiene zugelassen wird, ohne daß die Schienenenden derart stark verformt werden, daß sie reißen. Hierdurch wird erreicht, einen Teil der Crashkräfte in Verformungskräfte umzuwandeln und dadurch zu absorbieren.

Die Dicke des Materials, aus dem die an die Schieneneinrichtung einstückig angeformten Sitzelemente bestehen, kann ebenfalls variieren. Dadurch wird vor allem unnötiges Gewicht eingespart. Dieser Effekt wird durch in die Sitzelemente eingelassene Ausnehmungen verstärkt.

Weitere Vorteile der Erfindung werden bei der nachfolgenden Beschreibung von Ausführungsbeispielen anhand der Zeichnungen deutlich werden. Es zeigen
- Fig. 1 -: eine Querschnittsansicht einer aus zwei Oberschienen bestehenden Schieneneinrichtung einer Sitzeinheit mit angeformter Sitzschale und einem Getriebegehäuse zur Aufnahme eines Getriebes zur Sitzlängsverstellung;
- Fig. 2 -: eine Querschnittsansicht einer aus zwei Oberschienen bestehenden Schieneneinrichtung einer Sitzeinheit mit Sitzseitenteilen und Getriebegehäusen zur Aufnahme von Getrieben für die Sitzhöhen- und Sitzlängsverstellung;
- Fig. 2a -: eine Teilansicht einer Oberschiene mit einem Getriebegehäuse zur Aufnahme eines 2- oder 3-fach Getriebes;
- Fig. 3 -: eine Querschnittsansicht einer Unterschiene mit einer an der Unterschiene angeformten Verzahnung;
- Fig. 3a -: eine Seitenansicht einer Unterschiene mit einstückig angeformten Verbindungsmitteln, die zur fahrzeugfesten Anordnung der Unterschiene vorgesehen sind;
- Fig. 4 -: eine Seitenansicht einer Oberschiene mit angeformtem Seitenteil, das mit Ausnehmungen versehen ist;
- Fig. 4a -: die Dicke der Oberschiene der Fig. 4 in Abhängigkeit vom Ort;
- Fig. 5 -: eine Querschnittsansicht einer aus zwei Oberschienen bestehenden Schieneneinrichtung und einer separaten Sitzschale mit einstückig angeformten Sitzseitenteilen.

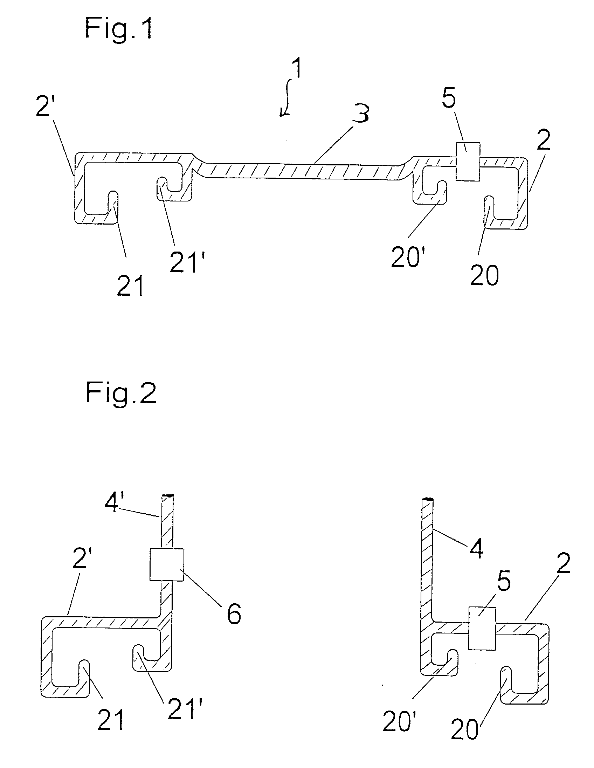

In Figur 1 ist schematisch ein Ausführungsbeispiel einer aus zwei Oberschienen 2, 2' ausgebildeten Schieneneinrichtung einer Sitzeinheit 1 im Querschnitt dargestellt. Eine Sitzschale 3 ist einstückig direkt an die Oberschienen 2, 2' angeformt. Sitzseitenteile sind bei dieser als Flachbau ausgebildeten Ausführungsform nicht vorgesehen. Diese Variante ermöglicht naturgemäß ausschließlich eine Längsverstellung, nicht dagegen eine Höhenverstellung der Sitzeinheit 1.

Die Oberschienen 2, 2' sind U-förmig geformt. Die Schenkel des U-förmigen Profils der Oberschienen 2, 2' sind zu Verhakungsbereichen 20, 20' bzw. 21, 21' ausgebildet, wobei die beiden Schenkel unterschiedlich lang sind. Die entsprechenden Verhakungsbereiche 20, 20' bzw. 21, 21' greifen in Führungs- und Verhakungsbereiche einer zugehörigen Unterschiene (nicht dargestellt) ein. Die beiden Oberschienen 2, 2' werden durch die Führung in der jeweiligen Unterschiene gehalten und sind entlang dieser verschiebbar.

An der geschlossenen Seite der Oberschiene 2 ist ein Getriebegehäuse 5 für die Aufnahme eines Getriebes für die Sitzlängsverstellung einstückig angeformt. Alternativ ist das Getriebegehäuse 5 an einer der beiden Schenkelseiten des U-förmigen Profils einstückig angeformt.

Alternativ oder zusätzlich zu dem an der Oberschiene 2 angeformten Getriebegehäuse 5 ist ein weiteres Getriebegehäuse (nicht dargestellt) zur Aufnahme eines Getriebes zur Sitzlängsverstellung auch an die Oberschiene 2' angeformt.

Alle in Fig. 1 dargestellten Sitzteile sind durch ein Gußverfahren einstückig hergestellt. Ein solches Verfahren sind z.B. das Spritz- oder Druckgußverfahren. Bei diesen Verfahren wird ein geeignetes Gießmaterial maschinell unter hohem Druck in eine geeignete Gußform gepreßt. Dieser Druck wird bis zum Erstarren aufrechterhalten. Das erstarrte Material wird dann aus der Gußform ausgeworfen.

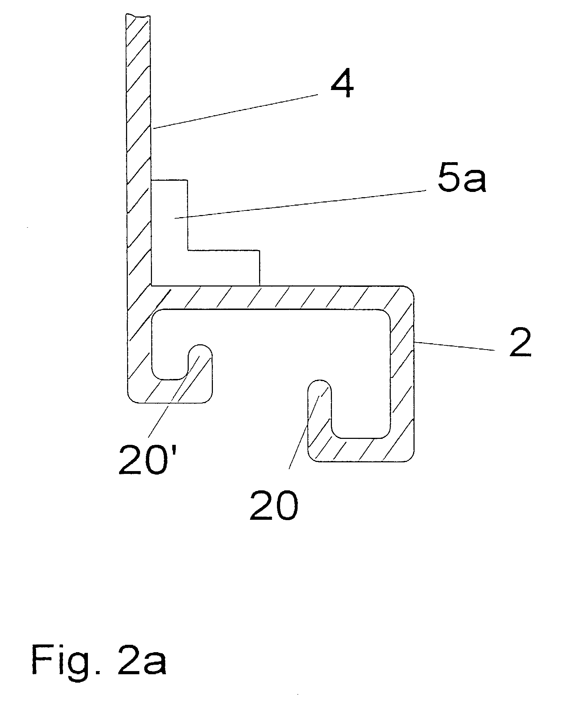

In Figur 2 ist ein weiteres Ausführungsbeispiel einer aus zwei Oberschienen bestehenden Schieneneinrichtung im Querschnitt dargestellt. Dabei weisen die beiden Oberschienen 2, 2' die aus Fig. 1 bekannte Form mit den Verhakungsbereichen 20, 20', 21, 21' auf.

An den Oberschienen 2, 2' sind zwei Sitzseitenteile 4, 4' einstückig angeformt. Zusätzlich zu einem an der geschlossenen Seite der als U-förmiges Profil ausgebildeten Oberschiene 2 angebrachten Getriebegehäuse 5 ist am Sitzseitenteil 4' ein Getriebegehäuse 6 zur Aufnahme eines Getriebes für die Sitzhöhenverstellung einstückig an die Schieneneinrichtung angeformt. Alternativ oder zusätzlich ist ein weiteres Getriebegehäuse (nicht dargestellt) zur Aufnahme eines Getriebes zur Sitzhöhenverstellung auch an das Sitzseitenteil 4 einstückig angeformt.

Figur 2a zeigt eine Teilansicht der aus Figur 2 bekannten Schieneneinrichtung. An die Oberschiene 2 ist das Sitzseitenteil 4 einstückig angeformt. Ein winklig ausgebildetes Getriebegehäuse 5a ist einstückig sowohl an der geschlossenen Seite des U-förmigen Profils der Oberschiene 2 als auch an der Außenwand des Sitzseitenteils 4 angeformt. Das Getriebegehäuse 5a dient vorzugsweise der Aufnahme eines kombinierten 2fach- oder 3fach-Getriebes, etwa für die die Sitzhöhen-, Sitz längs- und Sitzkissenverstellung.

Vorteilhaft bei der einstückigen Anformung eines solchen Getriebegehäuses 5a für ein Mehrfach-Getriebe an eine Sitzeinheit ist die komfortable Bedienung der Verstelleinrichtung und die Substituierung mehrerer Getriebegehäuse durch ein einzelnes Getriebegehäuse 5a.

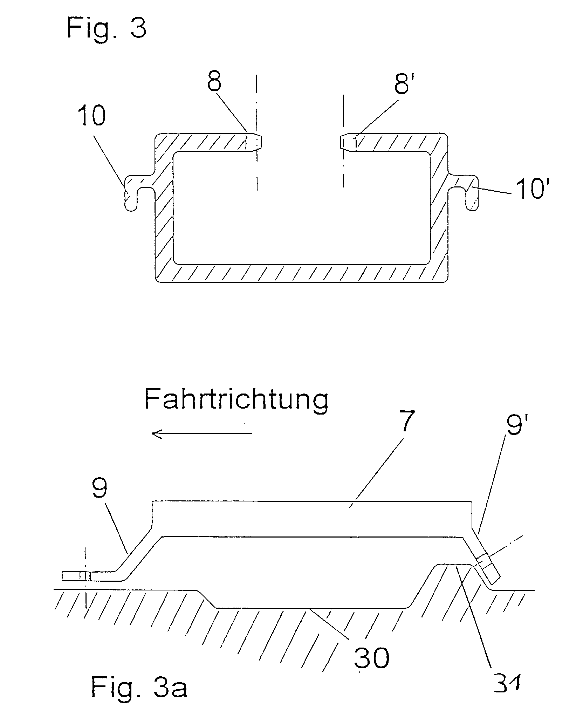

In Figur 3 ist ein Ausführungsbeispiel einer Unterschiene 7 einer Schieneneinrichtung dargestellt. Die Unterschiene ist im wesentlichen U-förmig ausgebildet, wobei die Öffnung dieser U-Form durch beiderseitige Stege teilweise geschlossen ist. An den ersten Steg ist dabei eine Schrägverzahnung 8 und an den zweiten Steg eine Geradverzahnung 8' einstükkig angeformt, wobei eine Verstellschnecke (nicht dargestellt) eines Verstellgetriebes zur Sitzlängsverstellung im Normalfall in die Schrägverzahnung 8 eingreift.

Die Schrägverzahnung 8 ist an die Kontur der Verstellschnekke angepaßt. Kämmt die nicht dargestellte Verstellschnecke mit der an der Unterschiene 7 angeformten Schrägverzahnung 8, so erhält man aufgrund der Konturanpassung und der damit verbundenen hohen Überdeckung eine sehr gute Kraftübertragung.

Die Geradverzahnung 8' tritt lediglich bei hohen Belastungen wie im Crashfall zusätzlich mit der Verstellschnecke in Eingriff, so daß auftretende Crashkräfte besser verteilt werden und eine zusätzliche Sicherung für den Crashfall zur Verfügung gestellt wird. Alternativ ist am zweiten Steg keine Verzahnung ausgebildet und dient dieser lediglich als Abstützung.

Die Verzahnungen 8, 8' der Unterschiene 7 werden als Gußteil in einer geeigneten Gußform direkt, d.h. ohne weiteres Bearbeiten der Unterschiene 7, hergestellt.

An den beiden Außenseiten der beiden Schenkel des U-förmigen Profils der Unterschiene 7 sind Führungs- und Verhakungsbereiche 10, 10' angeformt, in die hier nicht dargestellte Verhakungsbereiche der Oberschienen 2, 2' entsprechend den Verhakungsbereichen 20, 20' bzw. 21, 21' der Fig. 1 eingreifen, so daß die Oberschienen 2, 2' in der Unterschiene 7 in Längsrichtung geführt werden und ein Trennen der Schienen beim Auftreten von Crashkräften verhindert wird.

Figur 3a zeigt die Seitenansicht einer Unterschiene 7, die auf einem Kraftfahrzeugboden 30 befestigt ist. Die Unterschiene 7 weist sowohl an ihrem vorderen als auch an ihrem hinteren Ende einstückig angeformte Befestigungselemente 9, 9' auf, deren Form dem Verlauf des Fahrzeugbodens 30 angepaßt ist. Etwa mittels Schraubverbindungen wird die Unterschiene 7 über die angeformten Befestigungselemente 9, 9' am Kraftfahrzeugboden 30 bzw. an einen am Kraftfahrzeugboden ausgebildeten Bock 31 befestigt.

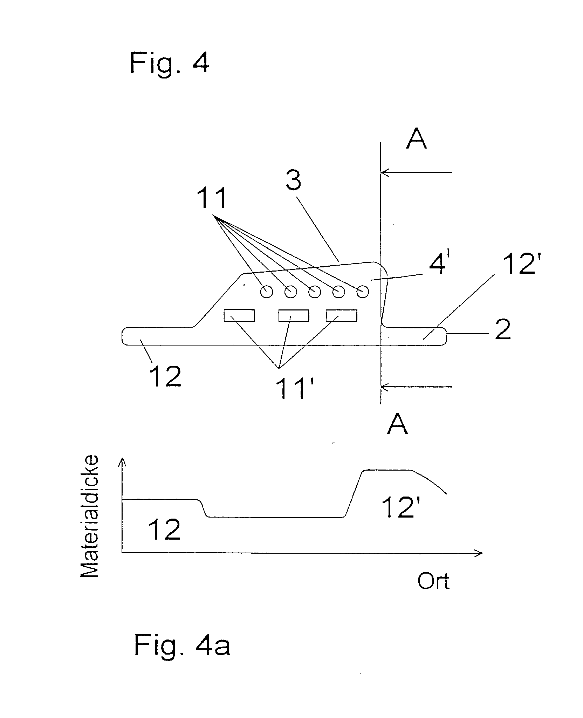

Figur 4 zeigt eine Seitenansicht einer Oberschiene 2' einer Schieneneinrichtung, an der einstückig ein Sitzseitenteil 4' und eine Sitzschale 3 angeformt sind. Die Sitzschale 3 verläuft entlang des Sitzseitenteils 4' schräg aufsteigend. Die Oberschiene 2' weist zwei unter dem Sitzseitenteil 4' und der Sitzschale 3 herausragende Enden 12, 12' auf. Zur Gewichtseinsparung weist das Seitenteil 4' Ausnehmungen 11, 11' auf.

Wie in Fig. 4a zu erkennen, variiert die Dicke des Materials der Oberschiene 2' mit dem Ort, um eine große Gewichtseinsparung bei großer Belastungsstabilität zu erreichen. Damit die Schieneneinrichtung im Crashfall nicht verformt wird oder gar reißt, ist die Materialdicke an den Schienenenden 12, 12' der Oberschiene 2' höher als in den anderen Bereichen.

Der Bereich des hinteren Schienenendes 12' der Oberschiene 2' weist die größte Materialdicke auf. Sie wird aber kurz vor dem eigentlichen Schienenende 12' der Oberschiene 2' wieder etwas geringer. Die Materialdicke am Schienenende 12' ist aber immer noch höher als in jedem anderen Bereich der Oberschiene 2.

Dieser Verlauf der Materialdicke ist so gewählt, daß bei einem Crash eine leichte Verformung der besonders belasteten Oberschiene 2' zugelassen wird, ohne daß die Oberschiene dabei reißt. Die am hinteren Schienenende 12' der Oberschiene 2' bei einem Unfall auftretenden Crash-Kräfte werden dabei zu einem Teil in Verformungskräfte umgewandelt und dadurch absorbiert. Durch den leicht abfallenden Verlauf der Materialdicke am hinteren Endbereich erfolgt zunächst eine etwas weichere und dann härter werdende Deformation.

Auch bei Vorsehen von Aussparungen 11, 11' wird die Materialdicke allgemein so gewählt, daß eine hohe Belastungsstabilität gesichert ist, insbesondere das Material auch bei starker Verformung nicht reißt.

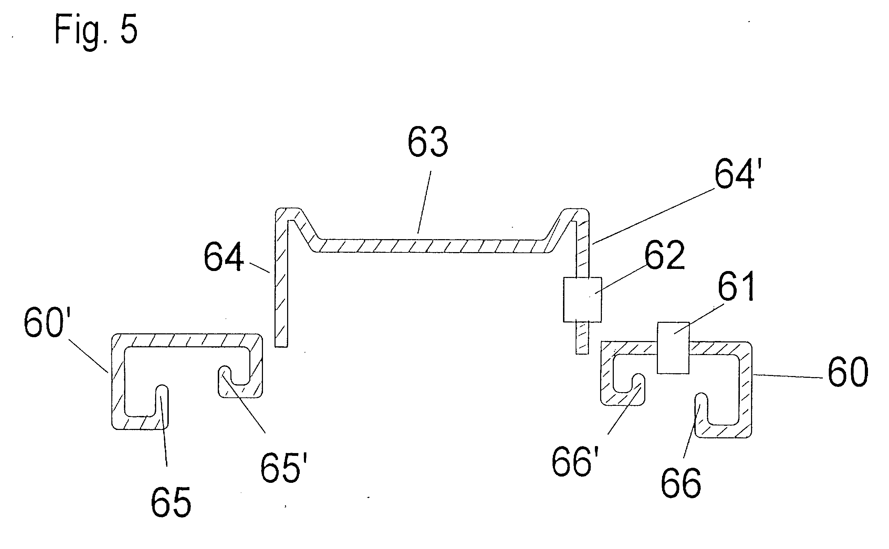

Figur 5 zeigt eine weitere Ausgestaltung einer erfindungsgemäßen Sitzeinheit. Die Sitzeinheit weist zwei Oberschienen 60, 60' auf, die U-förmig ausgebildet sind. Die Schenkel des U-förmigen Profils sind zu Verhakungsbereichen 65, 65', 66, 66' ausgebildet. An der geschlossenen Seite der Oberschiene 60 ist einstückig ein Getriebegehäuse 61 zur Aufnahme eines Getriebes für die Sitzlängsverstellung angeformt. Alternativ zu der Ausführung als Gußteil können die Oberschienen 60, 60' jedoch auch als Strangpreßprofil oder als Stahlschiene ausgebildet sein.

An eine als Gußteil ausgebildete Sitzschale 63 sind Sitzseitenteile 64, 64' einstückig angeformt. Zur Sitzhöhenverstellung kann ein Getriebegehäuse 62, das einstückig an dem Sitzseitenteil 64' angeformt ist, ein Getriebe aufnehmen.

Die Sitzschale 63 und die an die Sitzschale 63 angeformten Sitzseitenteile 64, 64' sind mit den Oberschienen 60, 60' über einen an sich bekannten, üblichen Hebel-Verstellmechanismus verbunden. Bei dieser Ausgestaltung der Erfindung sind also die Oberschienen 60, 60' nicht einstückig mit den Sitzseitenteilen 64, 64' und der Sitzschale 63 verbunden.

Die Erfindung beschränkt sich in ihrer Ausführung nicht auf die vorstehend angegebenen Ausführungsbeispiele. Vielmehr sind eine Anzahl von Varianten denkbar, welche von dem erfindungsgemäßen Verfahren auch bei grundsätzlich anders gearteten Ausführungen Gebrauch machen.

## Patentansprüche

1. Sitzeinheit für Kraftfahrzeuge mit mehreren Sitzelementen, insbesondere Elementen einer Sitzlängsverstellung, Befestigungs- und Lagerelementen, Sitzseitenteilen, einer Sitzschale und/oder Getriebegehäusen,
**dadurch gekennzeichnet**,
daß mindestens zwei der Sitzelemente (2, 2', 3, 4, 4', 5, 6, 7, 8, 9) in einem einstückigen Gußteil ausgebildet sind.

2. Sitzeinheit nach Anspruch 1 mit einer fahrzeugfest angeordneten führenden Schieneneinrichtung und einer entlang der führenden Schieneneinrichtung verschiebbaren geführten Schieneneinrichtung, **dadurch gekennzeichnet**, daß mindestens eine der Schieneneinrichtungen (2, 2'; 7) als Gußteil ausgebildet ist und an der als Gußteil ausgebildeten Schieneneinrichtung (2, 2') weitere Sitzelemente (3, 4, 4') einstückig angeformt sind.

3. Sitzeinheit nach Anspruch 2, **dadurch gekennzeichnet**, daß die weiteren Sitzelemente (3, 4, 4') Bestandteile einer Sitzverstelleinrichtung umfassen.

4. Sitzeinheit nach Anspruch 3, **dadurch gekennzeichnet**, daß an mindestens einer als Gußteil ausgebildeten Schieneneinrichtung (2, 2') ein Getriebegehäuse (5, 6) angeformt ist, das zur Aufnahme eines Verstellgetriebes vorgesehen ist.

5. Sitzeinheit nach Anspruch 3 oder 4, **dadurch gekennzeichnet**, daß an mindestens einer als Gußteil ausgebildeten Schieneneinrichtung (7) eine in Schienenlängsrichtung verlaufende Verzahnung (8, 8') angeformt ist.

6. Sitzeinheit nach Anspruch 4 und 5, **dadurch gekennzeichnet**, daß an einer der Schieneneinrichtungen (7) eine in Schienenlängsrichtung verlaufende Verzahnung (8, 8') und an der anderen Schieneneinrichtung (2, 2') ein Gehäuse (5) für das Getriebe der Sitzlängsverstellung angeformt ist.

7. Sitzeinheit nach Anspruch 5 oder 6, **dadurch gekennzeichnet**, daß an einem ersten Steg der einen Schieneneinrichtung eine Schrägverzahnung (8) und an einem zweiten Steg dieser Schieneneinrichtung eine Geradverzahnung (8') ausgebildet ist.

8. Sitzeinheit nach mindestens einem der Ansprüche 3 bis 7, **dadurch gekennzeichnet**, daß an mindestens einer als Gußteil ausgebildeten Schieneneinrichtung (2, 2') eine Lagerstelle für ein Betätigungselement, z.B. für einen schwenkbar gelagerten Hebel einer Sitzverstelleinrichtung angeformt ist.

9. Sitzeinheit nach mindestens einem der Ansprüche 3 bis 8, **dadurch gekennzeichnet**, daß an mindestens einer als Gußteil ausgebildeten Schieneneinrichtung (2, 2'; 7) ein Anschlag zur Begrenzung des Verstellweges angeformt ist.

10. Sitzeinheit nach mindestens einem der Ansprüche 2 bis 9, **dadurch gekennzeichnet**, daß zumindest die geführte Schieneneinrichtung (2, 2') als Gußteil ausgebildet ist und daß an der geführten Schieneneinrichtung (2, 2') tragende Sitzelemente (3, 4, 4') einstückig angeformt sind.

11. Sitzeinheit nach Anspruch 10, **dadurch gekennzeichnet**, daß an der geführten Schieneneinrichtung (2,2') das Sitzseitenteil (4,4') einstückig angeformt ist.

12. Sitzeinheit Anspruch 10 oder 11, **dadurch gekennzeichnet**, daß an der geführten Schieneneinrichtung (2,2') das Sitzseitenteil (4,4') und die Sitzschale (3) einstückig angeformt sind.

13. Sitzeinheit nach mindestens einem der Ansprüche 2 bis 12, **dadurch gekennzeichnet**, daß zumindest die führende Schieneneinrichtung (7) als Gußteil ausgebildet ist und daß an der führenden Schieneneinrichtung (7) Verbindungsmittel (9) einstückig angeformt sind, die zur fahrzeugfesten Anordnung der Schieneneinrichtung (7) vorgesehen sind.

14. Sitzeinheit nach mindestens einem der Ansprüche 2 bis 13, **dadurch gekennzeichnet**, daß die Dicke des Materials, aus dem die als Gußteil ausgebildete Schieneneinrichtung (2, 2'; 7) besteht, variiert, insbesondere entlang der Schienenlängsrichtung.

15. Sitzeinheit nach mindestens einem der Ansprüche 2 bis 15, **dadurch gekennzeichnet**, daß die Dicke des Materials, aus dem die an die als Gußteil ausgebildete Schieneneinrichtung (2, 2') angeformten Sitzelemente (3, 4, 4', 5, 6) bestehen, variiert.

16. Sitzeinheit nach Anspruch 14 oder 15, **dadurch gekennzeichnet**, daß die Materialdicke an einem Ende der als Gußteil ausgebildeten Schieneneinrichtung (2, 2') größer ist als in jedem anderen Bereich der Schieneneinrichtung (2, 2'), wobei die Schieneneinrichtung (2, 2') an diesem Ende bei auftretenden Crash-Kräften teilweise verformbar ist, ohne jedoch zu reißen.
